(19) **Europäisches Patentamt**
**European Patent Office**
**Office européen des brevets**

(11) **EP 4 783 438 A1**

(12) **DEMANDE DE BREVET EUROPEEN**

(43) Date de publication:
**29.07.2026 Bulletin 2026/31**

(21) Numéro de dépôt: **26153173.5**

(22) Date de dépôt: **21.01.2026**

(51) Classification Internationale des Brevets (IPC):
**H02M 1/00** (2006.01)   **H02M 1/32** (2007.01)
**H02M 1/36** (2007.01)   **H02M 1/42** (2007.01)
**H02M 7/797** (2006.01)

(52) Classification Coopérative des Brevets (CPC):
**H02M 1/36; H02M 1/007; H02M 1/32;
H02M 1/4216; H02M 1/4233; H02M 7/797**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **23.01.2025 FR 2500685**

(71) Demandeur: **Valeo Electrification
95892 Cergy Pontoise (FR)**

(72) Inventeurs:
• **GUENOUNE, Ibrahim
95892 Cergy Pontoise (FR)**

• **RIBEIRO DE FARIA SANTOS, Kelly
95892 Cergy Pontoise (FR)**
• **DA COSTA, Jose Louis
95892 Cergy Pontoise (FR)**
• **BOUCENNA, Nidhal
95892 Cergy Pontoise (FR)**
• **PAUL, Benjamin
95892 Cergy Pontoise (FR)**
• **MBAYE, Ousmane
95892 Cergy Pontoise (FR)**

(74) Mandataire: **Valeo Powertrain Systems
Service Propriété Intellectuelle
Immeuble le Delta
14, avenue des Béguines
95892 Cergy Pontoise (FR)**

(54) **MÉTHODE DE COMMANDE D'UN CHARGEUR D'UNITÉ DE STOCKAGE D ÉNERGIE ÉLECTRIQUE DE VÉHICULE, ET CHARGEUR**

(57)   Méthode de commande d'un chargeur (1) d'unité de stockage d'énergie électrique de véhicule, le chargeur (1) comprenant :

- un connecteur (3) apte à être branché à un réseau électrique apte à fournir une tension alternative triphasée,
- un onduleur/redresseur (6), comprenant trois bras de commutation (7) montés en parallèle, chaque bras de commutation (7) comprenant deux interrupteurs (8) disposés de part et d'autre d'un point milieu (9) apte à être connecté à une phase respective de la tension alternative,
- un quatrième bras de commutation (10) monté en parallèle des bras de commutation (7) de l'onduleur/redresseur, ce quatrième bras de commutation (10) comprenant deux interrupteurs (11) disposés de part et d'autre d'un quatrième point milieu (12) apte à être connecté au neutre du réseau électrique, et
- une branche (13) montée en parallèle desdits bras de commutation (7, 10), comprenant deux condensateurs (14) disposés de part et d'autre d'un cinquième point milieu (15), et une résistance de mesure (17), montée en série avec l'un des condensateurs (14),

la branche (13) et les bras de commutation (7, 10) étant montés entre deux bornes à potentiel continu,
un premier interrupteur (20) étant monté en parallèle de la résistance de mesure (17) et un deuxième interrupteur (21) étant monté en série entre le quatrième (12) et le cinquième (15) point milieu,
la méthode comprenant les étapes successives suivantes:

- la commande de l'onduleur/redresseur pour appliquer aux bornes de la branche une première tension de commande, le premier interrupteur (20) et le deuxième interrupteur (21) étant ouverts,
- la commande de l'onduleur/redresseur (6) de manière à ce que la branche (13) ne soit plus électriquement alimentée,
- la fermeture du premier (20) et du deuxième (21) interrupteur, et
- la commande de l'onduleur/redresseur (6) pour appliquer aux bornes de la branche une deuxième tension de commande, le premier (20) et deuxième (21) interrupteurs étant fermés.

[Fig 1]

## Description

La présente invention concerne une méthode de commande d'un chargeur d'unité de stockage d'énergie électrique de véhicule, et elle concerne également un tel chargeur. L'unité de stockage d'énergie électrique est par exemple une batterie, pouvant présenter une tension nominale supérieure à 60V, par exemple supérieure ou égale à 300V, à 400V, à 800V, voire à 1000V.

Le chargeur comprend dans un exemple connu :

- un connecteur apte à être branché à un réseau électrique apte à fournir une tension alternative triphasée,
- un onduleur/redresseur, comprenant trois bras de commutation montés en parallèle, chaque bras de commutation comprenant deux interrupteurs disposés de part et d'autre d'un point milieu apte à être connecté à une phase respective de la tension alternative,
- un quatrième bras de commutation monté en parallèle des bras de commutation de l'onduleur/redresseur, ce quatrième bras de commutation comprenant deux interrupteurs disposés de part et d'autre d'un quatrième point milieu apte à être connecté au neutre du réseau électrique, et
- une branche montée en parallèle desdits bras de commutation, comprenant deux condensateurs disposés de part et d'autre d'un cinquième point milieu,

la branche et les bras de commutation étant montés entre deux bornes à potentiel continu, un interrupteur étant monté en série entre le quatrième et le cinquième point milieu.

Un tel chargeur est connu de la demande CN 112 803 800.

Lorsque l'on souhaite démarrer la charge de l'unité de stockage d'énergie électrique à l'aide d'un tel chargeur et pré-charger les condensateurs de la branche, il est connu d'opérer avec l'interrupteur monté entre le quatrième et le cinquième points milieux ouvert et d'imposer aux bornes de la branche une tension dont la valeur est celle de l'amplitude de la tension composée du réseau. Dans ce cas, et en l'absence de connexion du cinquième point milieu au neutre, chaque condensateur de la branche reçoit la moitié de cette valeur de tension. Lorsque l'on ferme l'interrupteur pour connecter le neutre du réseau à la branche, la branche reçoit entre ses bornes une tension égale au double de l'amplitude de la tension de phase du réseau triphasé. Il y a donc une augmentation de la tension reçue par chaque condensateur d'un facteur égal à $2/\sqrt{3}$, soit 1,15. Cette augmentation de tension et le régime transitoire lié à la fermeture de l'interrupteur provoque l'apparition d'un courant d'appel important dans le condensateur concerné, qui peut endommager ce condensateur et rendre non-fonctionnel le chargeur.

Il existe un besoin pour remédier à l'inconvénient précité.

L'invention a pour but de répondre à ce besoin et elle y parvient, selon l'un de ses aspects, à l'aide d'une méthode de commande d'un chargeur d'unité de stockage d'énergie électrique de véhicule, le chargeur comprenant :

- un connecteur apte à être branché à un réseau électrique apte à fournir une tension alternative triphasée,
- un onduleur/redresseur, comprenant trois bras de commutation montés en parallèle, chaque bras de commutation comprenant deux interrupteurs commandables disposés de part et d'autre d'un point milieu apte à être connecté à une phase respective de la tension alternative,
- un quatrième bras de commutation monté en parallèle des bras de commutation de l'onduleur/redresseur, ce quatrième bras de commutation comprenant deux interrupteurs disposés de part et d'autre d'un quatrième point milieu apte à être connecté au neutre du réseau électrique, et
- une branche montée en parallèle desdits bras de commutation, comprenant deux condensateurs disposés de part et d'autre d'un cinquième point milieu, et une résistance de mesure, montée en série avec l'un des condensateurs,

la branche et les bras de commutation étant montés entre deux bornes à potentiel continu, un premier interrupteur étant monté en parallèle de la résistance de mesure et un deuxième interrupteur étant monté en série entre le quatrième et le cinquième point milieu, la méthode comprenant les étapes successives suivantes :

- la commande de l'onduleur/redresseur par modulation de largeur d'impulsion pour appliquer aux bornes de la branche une première tension de commande supérieure au double de l'amplitude de la tension de phase du réseau, le premier interrupteur et le deuxième interrupteur étant ouverts,
- la commande de l'onduleur/redresseur de manière à ce que la branche ne soit plus électriquement alimentée,
- la fermeture du premier et du deuxième interrupteur, et
- la commande de l'onduleur/redresseur par modulation de largeur d'impulsion pour appliquer aux bornes de la branche une deuxième tension de commande supérieure au double de l'amplitude de la tension de phase du réseau, le premier interrupteur et le deuxième interrupteur étant fermés.

Selon l'invention, on applique à la branche, avant la fermeture du premier et du deuxième interrupteur, une tension de commande dont la valeur est déjà supérieure à celle qui sera appliquée après fermeture du deuxième interrupteur et connexion du quatrième point milieu au neutre du réseau électrique. L'arrêt de l'alimentation électrique de la branche avant la fermeture des premier et deuxième interrupteurs permet de ne pas cumuler les effets transitoires liés :

- à la fermeture du premier et du deuxième interrupteurs d'une part, et
- à l'activation de la commande de l'onduleur/redresseur d'autre part,

et cet arrêt permet que l'augmentation de tension aux bornes de chaque condensateur lors de la fermeture du deuxième interrupteur ne génère pas de courant d'appel important dans le condensateur de la branche qui n'est pas en série avec la résistance de mesure.

La présence de la résistance de mesure permet de protéger le condensateur avec lequel elle est montée en série du courant d'appel lors de la fermeture du deuxième interrupteur. Cette résistance de mesure peut aussi permettre de limiter les variations de tension aux bornes de ce condensateur.

La méthode ci-dessus permet de protéger l'autre condensateur de la branche du courant d'appel lors de cette fermeture. On atteint ainsi l'objectif de protection des deux condensateurs en évitant la génération de courants d'appel susceptibles de détériorer ces condensateurs lors de la fermeture du deuxième interrupteur.

La commande à une première tension supérieure du double de l'amplitude de la tension de phase du réseau permet de maintenir la tension aux bornes de la branche au-dessus de cette valeur égale au double de l'amplitude de la tension de phase du réseau lors de la fermeture des premier et deuxième interrupteurs. Cette fermeture s'effectue en effet à l'issue d'une étape lors de laquelle ladite branche n'est plus électriquement alimentée, et donc à l'issue d'une étape lors de laquelle la tension appliquée à ladite branche diminue.

Par ailleurs, commander à une première tension supérieure au double de l'amplitude de la tension de phase du réseau permet d'éviter de faire saturer le rapport cyclique utilisé pour la régulation du courant de phase de l'onduleur/redresseur, lorsque ce rapport cyclique est égal au rapport entre :

- la somme de la tension de phase et la tension de commande des interrupteurs électroniques, et
- la tension appliquée à la branche comprenant les deux condensateurs.

Ainsi, commander cette tension appliquée à ladite branche à une première tension de commande supérieure permet de réduire les risques de saturation. La deuxième tension de commande supérieure au double de l'amplitude de la tension de phase du réseau permet également d'obtenir ce dernier effet en lien avec la saturation de rapport cyclique.

Les étapes ci-dessus sont par exemple effectuées lors de la pré-charge des condensateurs de la branche, lorsque l'on souhaite commencer à charger l'unité de stockage d'énergie électrique du véhicule à l'aide du chargeur.

La fermeture du premier et du deuxième interrupteur ne se fait pas nécessairement simultanément. Le premier interrupteur est par exemple fermé avant le deuxième interrupteur. Un décalage temporel compris entre 1ms et 10ms, notamment compris entre 1ms et 5ms est par exemple imposé entre ces deux fermetures. En variante, les deux interrupteurs précités sont fermés simultanément.

La commande de l'onduleur/redresseur de manière à ce que la branche ne soit plus électriquement alimentée peut être une commande de ses interrupteurs de manière à ce que l'onduleur/redresseur se comporte globalement comme un interrupteur ouvert.

La résistance de mesure peut être montée en série avec le condensateur disposé entre le cinquième point milieu et celle des bornes à potentiel continu étant la masse. Cette position de la résistance de mesure permet que celle-ci soit associée à un potentiel électrique fixe, à savoir la masse.

En variante, la résistance de mesure peut être montée en série avec le condensateur disposé entre le cinquième point milieu et celle des bornes à potentiel continu étant à un potentiel électrique positif différent de la masse.

Chacun du premier et du deuxième interrupteur est par exemple un relais électrotechnique. L'invention n'est cependant pas limitée à un tel exemple, d'autres interrupteurs étant possibles, par exemple un relais statique à base de coupleurs optiques et/ou de transistor MOSFET et/ou de transistor IGBT.

L'onduleur/redresseur peut être configuré pour exercer une correction du facteur de puissance de la tension alternative (PFC en anglais). Les interrupteurs de l'onduleur/redresseur sont par exemple des interrupteurs électroniques commandables tels que des transistors MOSFET, et les interrupteurs du quatrième bras de commutation sont par exemple des interrupteurs électroniques commandables tels que des transistors IGBT ou des transistors MOSFET. Les interrupteurs électroniques du quatrième bras sont par exemple de même type que ceux de l'onduleur/redresseur, par exemple des transistors MOSFET. En variante, les interrupteurs électroniques du quatrième bras sont chacun une diode, par exemple une diode dite « fast time recovery » (ou FTR) ou un autre type d'interrupteur électronique non commandable.

Dans tout ce qui précède, la résistance de mesure peut être une résistance simple, c'est-à-dire une impédance dont la valeur de résistance reste constante. En variante, cette résistance de mesure peut être une thermistance. Il s'agit par exemple d'une thermistance à coefficient de température positif, encore appelée « PTC » en anglais. La résistance de mesure peut présenter une valeur comprise entre 60Ω et 120Ω. L'invention n'est pas limitée à une résistance, l'emploi d'une inductance étant envisageable

La valeur de la première tension de commande et la valeur de la deuxième tension de commande peuvent être égales.

Dans tout ce qui précède, la valeur de la première tension de commande et la valeur de la deuxième tension de commande peuvent être comprises entre

$$2 \times \sqrt{2} \times V_{eff} \text{ et } 2 \times \sqrt{2} \times V_{eff} + 100V \text{, étant}$$

par exemple égales à $2 \times \sqrt{2} \times V_{eff} + 100V$. $V_{eff}$ désigne ici la valeur efficace de la tension de phase du réseau. La Déposante est arrivée par des tests à la plage de valeurs précitée qui permet de garantir que la valeur de la tension appliquée à la branche reste supérieure au double de l'amplitude de la tension de phase du réseau lors de l'ouverture des deux interrupteurs.

Les deux condensateurs de la branche montée en parallèle des bras de commutation peuvent avoir la même capacité, cette dernière étant par exemple comprise entre 1000 μF et 2000 μF, comme on le verra par la suite.

Dans tout ce qui précède, le quatrième point milieu peut être relié à un conducteur électrique apte à être connecté au neutre du réseau électrique, et le courant circulant dans ce conducteur électrique est le « courant au neutre ».

L'étape de commande de l'onduleur /redresseur par modulation de largeur d'impulsion pour appliquer aux bornes de la branche la deuxième tension de commande supérieure au double de l'amplitude de la tension de phase du réseau, une fois le premier et le deuxième interrupteurs fermés, peut être conditionnée à la vérification que la tension aux bornes de la branche est déjà supérieure au double de l'amplitude de la tension de phase du réseau. Lorsque cette condition n'est pas remplie, le premier et le deuxième interrupteur sont par exemple rouverts et on revient à la configuration dans laquelle est appliquée aux bornes de la branche une tension dont la valeur est celle de l'amplitude de la tension composée du réseau, avant que la première tension de commande ne soit appliquée de nouveau à la branche. Cette vérification permet de s'assurer que l'application de la deuxième tension de commande n'entraînera pas un saut de tension trop important pour les condensateurs de la branche.

Dans tout ce qui précède, la durée entre :

- le passage à la commande de l'onduleur/redresseur de manière à ce que la branche ne soit plus électriquement alimentée, et
- la fermeture du premier et du deuxième interrupteur

est par exemple inférieure à 5s, notamment à 1s, notamment à 100ms.

Dans tout ce qui précède, le chargeur peut encore comprendre un convertisseur de tension DC/DC isolé apte à convertir la tension aux bornes de la branche en une tension apte à être appliquée aux bornes de l'unité de stockage d'énergie électrique, et les étapes ci-dessus peuvent être appliquées alors que ce convertisseur de tension DC/DC est commandé de manière à ne pas transférer de tension entre la branche et l'unité de stockage d'énergie électrique.

L'invention a encore pour objet, selon un autre de ses aspects, un chargeur d'unité de stockage d'énergie électrique de véhicule, comprenant :

- un connecteur apte à être branché à un réseau électrique apte à fournir une tension alternative triphasée,
- un onduleur/redresseur, comprenant un premier, un deuxième et un troisième bras de commutation montés en parallèle, chaque bras de commutation comprenant deux interrupteurs électroniques commandables disposés de part et d'autre d'un point milieu apte à être connecté à une phase respective de la tension alternative,
- un quatrième bras de commutation monté en parallèle des bras de commutation de l'onduleur/redresseur, ce quatrième bras de commutation comprenant deux interrupteurs disposés de part et d'autre d'un quatrième point milieu apte à être connecté au neutre du réseau électrique, et
- une branche montée en parallèle desdits bras de commutation, comprenant deux condensateurs disposés de part et d'autre d'un cinquième point milieu, et une résistance de mesure, montée en série avec l'un des condensateurs,

la branche et les bras de commutation étant montés entre deux bornes à potentiel continu, un premier interrupteur étant monté en parallèle de la résistance de mesure et un deuxième interrupteur étant monté en série entre le quatrième et le cinquième point milieu, et

- une unité de contrôle adaptée pour exécuter les étapes de la méthode ci-dessus.

Tout ce qui précède s'applique encore au chargeur selon cet autre aspect de l'invention.

L'onduleur/redresseur peut être configuré pour exercer une correction du facteur de puissance de la tension alternative (PFC en anglais). L'onduleur/redresseur utilise par exemple alors la topologie dite « totem-pôle ».

Le chargeur peut comprendre un convertisseur de tension DC/DC monté en cascade avec le quatrième bras de commutation et la branche comprenant les deux condensateurs.

Ce convertisseur de tension DC/DC comprend par exemple une isolation galvanique, notamment via un transformateur. Ce transformateur est par exemple un transformateur monophasé ou triphasé. Ce convertisseur de tension DC/DC comprend de façon connue :

- un deuxième onduleur/redresseur monté entre la sortie continue du précédent onduleur/redresseur et le primaire du transformateur, et
- un troisième redresseur/onduleur ou un redresseur à diodes, monté entre le secondaire du transformateur et l'unité de stockage d'énergie électrique. Lorsqu'un troisième redresseur/onduleur est présent, il peut comprendre des transistors MOSFET permettant un redressement synchrone.

Le convertisseur DC/DC est par exemple un convertisseur résonant de type LLC ou CLLC.

En parallèle du quatrième bras de commutation peut également être monté un autre bras comprenant uniquement un condensateur. Il s'agit par exemple d'un condensateur dont la capacité est de l'ordre de quelques centaines de nF. Ce condensateur vise notamment à réduire l'ondulation haute fréquence. Ce condensateur est par exemple en polypropylène ou en céramique.

L'unité de contrôle peut comprendre un microcontrôleur, ou un circuit intégré par exemple un FPGA ou un ASIC. L'unité de contrôle peut être centralisée, ou être répartie entre plusieurs modules distants.

Dans tout ce qui précède, le chargeur peut comprendre un étage de filtrage du courant alternatif disposé en série entre le connecteur et l'onduleur/redresseur. Cet étage de filtrage permet par exemple, lorsque la tension alternative est polyphasée, un filtrage du courant de mode commun et/ou un filtrage du courant différentiel.

Dans tout ce qui précède, le chargeur peut comprendre un étage de filtrage du courant continu disposé en série entre le convertisseur DC/DC et l'unité de stockage d'énergie électrique.

Dans tout ce qui précède, la tension du réseau peut présenter une fréquence de 50 Hz ou 60 Hz et une valeur efficace de tensions de phase égale à 230V ou 240V. Dans tout ce qui précède, l'unité de stockage d'énergie électrique est par exemple une batterie, pouvant présenter une tension nominale supérieure à 60V, par exemple supérieure ou égale à 300V, à 400V, à 800V, voire à 1000V.

Dans tout ce qui précède, le chargeur peut permettre de charger l'unité de stockage d'énergie électrique avec une puissance de 7kW, 11kW ou 22kW, voire plus.

Le chargeur peut être regroupé ou non dans un même boîtier avec un convertisseur de tension DC/DC assurant une conversion de tension entre la tension aux bornes de l'unité de stockage d'énergie électrique, dite « haute tension », et la tension du réseau de bord, dite « basse tension ». Comme déjà mentionné, la haute tension est par exemple supérieure à 60V, par exemple supérieure ou égale à 300V, à 400V, à 800V, voire à 1000V tandis que la basse tension est par exemple égale à 12V ou à 48V.

L'invention a encore pour objet, selon encore un autre de ses aspects, un produit programme d'ordinateur comprenant des instructions qui conduisent le chargeur ci-dessus à exécuter les étapes de la méthode ci-dessus.

L'invention a encore pour objet, selon encore un autre de ses aspects, un support lisible par ordinateur, sur lequel est enregistré le programme d'ordinateur ci-dessus. Au sens de la présente demande, l'ordinateur pouvant lire le programme d'ordinateur est par exemple l'unité de contrôle précitée, le cas échéant via son microcontrôleur, ou son circuit intégré tel qu'un FPGA ou un ASIC.

Dans tout ce qui précède, le chargeur peut, ou non être réversible. Un chargeur réversible permet alors le transfert d'énergie électrique depuis l'unité de stockage d'énergie électrique vers le réseau électrique ou vers une charge branchée au connecteur du chargeur.

L'invention pourra être mieux comprise à la lecture de la description qui va suivre d'un exemple non limitatif de mise en œuvre de celle-ci et à l'examen du dessin annexé sur lequel :

- [Fig.1] représente un chargeur au sein duquel un exemple de méthode de commande selon l'invention peut être mis en œuvre,
- [Fig.2] est une vue schématique de différentes étapes d'une méthode selon un exemple de mise en œuvre de l'invention.

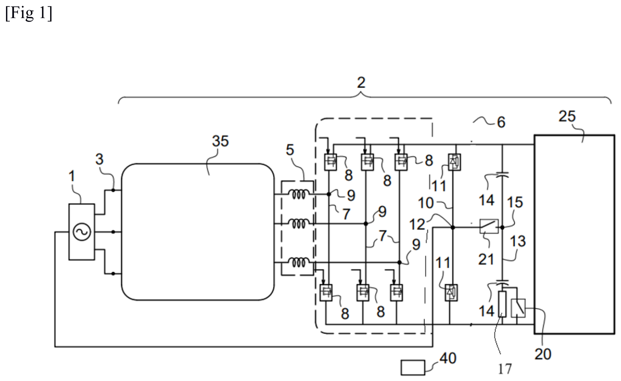

On a représenté sur la figure 1 un exemple de chargeur 2 d'une unité de stockage d'énergie électrique à partir d'un réseau électrique 1. L'unité de stockage d'énergie électrique est ici une batterie utilisée pour l'alimentation électrique d'une machine électrique de propulsion de véhicule. Cette batterie présente par exemple une tension nominale supérieure à 60V, notamment à 300V, notamment à 400V, notamment à 800V, voire à 1000V.

Le réseau électrique 1 est par exemple un réseau triphasé véhiculant une tension à une première fréquence qui est de 50Hz ou 60Hz et dont la valeur efficace est de 230V ou 240V. Le réseau électrique 1 est connecté au chargeur par l'intermédiaire d'un connecteur 3 représenté sur la figure 1 de manière schématique. Ce connecteur 3 comprend par exemple quatre contacts pour la connexion au réseau électrique, à savoir un contact par phase et un contact pour le neutre.

Le chargeur 2 comprend, dans cet exemple :

- un onduleur/redresseur 6, comprenant trois bras de commutation 7 montés en parallèle, chaque bras de commutation 7 comprenant deux interrupteurs électroniques commandables 8 disposés de part et d'autre d'un point milieu 9 apte à être connecté à une phase respective de la tension alternative du réseau électrique 1,
- un quatrième bras de commutation 10 monté en parallèle des bras de commutation 7, ce quatrième bras de commutation 10 comprenant deux interrupteurs 11 disposés de part et d'autre d'un quatrième point milieu 12 apte à être connecté au neutre du réseau électrique, et

- une branche 13 montée en parallèle desdits bras de commutation 7 et 10, comprenant deux condensateurs 14 disposés de part et d'autre d'un cinquième point milieu 15, et une résistance de mesure 17, montée en série avec l'un des condensateurs 14. La résistance de mesure 17 est ici une thermistance à coefficient de température positif, encore appelée « PTC » en anglais.

Tous les interrupteurs 8 sont ici des transistors MOSFET ou IGBT, et tous les interrupteurs 11 sont ici des diodes dites FTR. En variante, les interrupteurs 11 peuvent être des transistors MOSFET ou des IGBT.

Chaque point milieu 9 d'un des premier, deuxième et troisième bras de commutation 7 peut être connecté à une inductance 5, de manière à former un montage dit « totem pole ».

On constate que la branche 13 et les bras de commutation 7 et 10 sont montés entre deux bornes à potentiel continu.

On constate également dans l'exemple considéré :

- que la résistance de mesure 17 est montée en série entre la masse et le condensateur 14 disposé entre le cinquième point milieu 15 et la masse, et
- qu'un premier interrupteur 20 est monté en parallèle de cette résistance de mesure 17.

Le quatrième point milieu 12 est également relié au cinquième point milieu 15 par l'intermédiaire d'un deuxième interrupteur 21.

Le premier interrupteur 20 et le deuxième interrupteur 21 sont ici des relais électrotechniques, En variante, d'autres exemples sont possibles, par exemple l'emploi de relais statiques à base de coupleurs optiques et/ou de transistors MOSFET et/ou de transistors IGBT.

Le chargeur 2 comprend encore dans l'exemple de la figure 1 un convertisseur de tension DC/DC 25 qui est représenté ici de façon très schématique. Ce convertisseur de tension DC/DC peut comprendre de façon connue deux convertisseurs DC/AC, notamment réversibles, et un transformateur d'isolation galvanique disposé entre ces deux convertisseurs DC/AC. Le convertisseur de tension DC/DC 25 est par exemple résonant, étant de type LLC ou CLLC, entre autres.

Comme représenté sur la figure 1, un étage de filtrage 35 du courant alternatif peut être prévu, cet étage de filtrage 35 étant ici disposé en série entre le connecteur 3 et l'onduleur/redresseur 6. Cet étage de filtrage 35 permet notamment dans le cas présent d'une tension alternative polyphasée un filtrage du courant de mode commun et/ou un filtrage du courant différentiel. Le cas échéant, et bien que non représenté sur la figure, un autre étage de filtrage du courant continu peut être présent, étant alors disposé en série entre le convertisseur DC/DC 25 et l'unité de stockage d'énergie électrique.

Le chargeur 2 comprend une unité de contrôle 40 dont le rôle va être décrit ci-après. Cette unité de contrôle 40 est par exemple réalisée à l'aide de plusieurs modules. Cette unité de contrôle 40 comprend par exemple des microcontrôleurs et/ou des circuits intégrés. Cette unité de contrôle 40 peut réaliser une commande de l'onduleur/redresseur 6 de façon à redresser le courant triphasé reçu du réseau électrique 1 tout en assurant une correction du facteur de puissance (« PFC » en anglais).

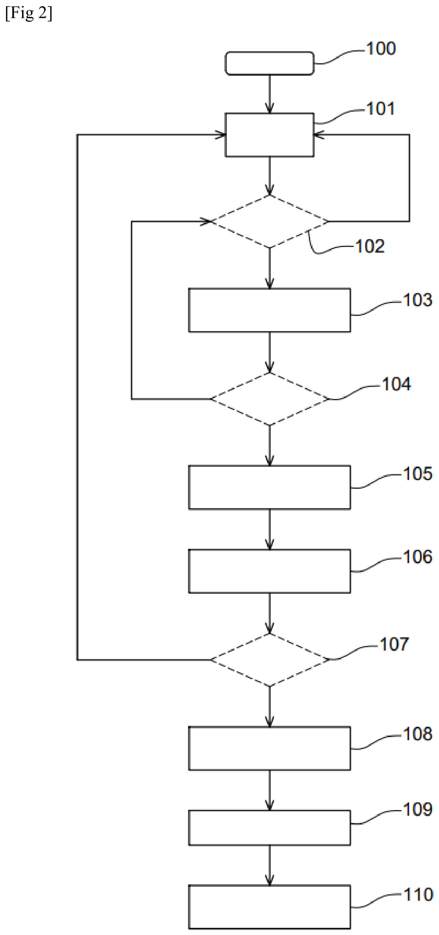

On va maintenant décrire plus en détail en référence à la figure 2 une séquence particulière de commande de l'onduleur/redresseur 6 lors de la pré-charge des condensateurs 14 de la branche 13 et pour démarrer la charge de l'unité de stockage d'énergie électrique à l'aide du chargeur 2.

Lors d'une étape 100 d'initialisation, l'unité de contrôle 40 vérifie que le premier interrupteur 20 et le deuxième interrupteur 21 sont ouverts.

Lors d'une étape 101, l'unité de contrôle 40 détecte le branchement du connecteur 3 au réseau électrique 1, et également que ce réseau électrique est bien triphasé.

Lors d'une étape 102, l'unité de contrôle 40 vérifie la valeur de tension appliquée à la branche 13 comprenant les deux condensateurs 14. Si cette valeur de tension est égale à l'amplitude de la tension composée du réseau 2, soit à $\sqrt{2} \times \sqrt{3} \times V_{eff}$ , où $V_{eff}$ est égale à la valeur efficace de la tension de phase du réseau, alors l'étape 103 est effectuée. Autrement un retour à l'étape 101 est effectué. Cette étape 102 correspond à une partie de la pré-charge des condensateurs 14.

Lors d'une étape 103, l'unité de contrôle 40 initie la commande l'onduleur/redresseur 6 de manière à ce que la tension aux bornes de la branche 13 soit supérieure au double de l'amplitude de la tension de phase du réseau électrique 2. L'onduleur/redresseur 6 est alors commandé par modulation de largeur d'impulsion pour appliquer une première tension de commande aux bornes de la branche 13 qui est ici égale à $\sqrt{2} \times 2 \times V_{eff} + \Delta$ avec $\Delta$ compris entre 0 et 100V, étant par exemple égal à 100V.

Lors d'une étape 104, on vérifie que la tension appliquée aux bornes de la branche 13 est bien égale à la première tension. Lorsque c'est le cas, l'étape 105 est effectuée. Autrement, un retour à l'étape 102 est effectué.

Lors d'une étape 105, la commande de l'onduleur/redresseur 6 est modifiée par l'unité de contrôle 40 afin que la branche 13 ne soit plus électriquement alimentée. Chaque interrupteur 8 d'un bras de commutation 7 est par exemple alors commandé pour être ouvert.

Lors d'une étape 106, l'unité de contrôle 40 commande la fermeture du premier interrupteur 20 et du deuxième interrupteur 21. Ces deux interrupteurs 20 et 21 peuvent être fermés simultanément. En variante, la fermeture du premier 20 et du deuxième 21 interrupteur ne se fait pas simultanément. Le premier interrupteur 20 est par exemple fermé avant le deuxième interrupteur 21. Un décalage temporel de l'ordre de 5ms est par exemple imposé entre ces deux fermetures.

Lors d'une étape 107, l'unité de contrôle 40 vérifie que la tension aux bornes de la branche est déjà supérieure au double de l'amplitude de la tension de phase du réseau. Lorsque cette condition est remplie, l'étape 108 est effectuée. Lorsque cette condition n'est pas remplie, un retour à l'étape 101 est effectué et les interrupteurs 20 et 21 sont rouverts.

Lors de l'étape 108, l'unité de contrôle 40 initie la commande l'onduleur/redresseur 6 de manière à ce que la tension aux bornes de la branche 13 soit supérieure au double de l'amplitude de la tension de phase du réseau électrique 2. L'onduleur/redresseur 6 est alors commandé par modulation de largeur d'impulsion pour appliquer une deuxième tension aux bornes de la branche 13 qui est égale à $\sqrt{2} \times 2 \times V_{eff} + \Delta$ avec $\Delta$ compris entre 0 et 100V. Cette deuxième tension est par exemple égale à la première tension, et $\Delta$ peut être égal à 100V. Lors des étapes 100 à 108, le convertisseur de tension DC/DC 25 est commandé de manière à ne pas permettre ce transfert de puissance.

Lors d'une étape 109, la tension appliquée à la branche 13 est bien égale à la deuxième tension de commande et l'unité de contrôle 40 peut alors commander le convertisseur de tension DC/DC 25 de manière à permettre un transfert de puissance entre la branche 13 et l'unité de stockage d'énergie électrique du véhicule.

L'étape 110 correspond à la charge en cours de l'unité de stockage d'énergie électrique par le chargeur 2. Lors de cette étape, la tension aux bornes de la branche 13 est contrôlée par la tension aux bornes de l'unité de stockage d'énergie électrique via le convertisseur de tension DC/DC 25.

L'invention n'est pas limitée à l'exemple qui vient d'être décrit.

L'invention porte encore sur un programme d'ordinateur comprenant des instructions qui conduisent l'unité de contrôle 40 à exécuter par exemple les étapes de la méthode décrites en référence à la figure 2. Ce programme d'ordinateur est par exemple enregistré sur un support lisible par ordinateur, « ordinateur » désignant de façon large tout système de traitement informatique.

**Revendications**

1. Méthode de commande d'un chargeur (1) d'unité de stockage d'énergie électrique de véhicule, le chargeur (1) comprenant :

   - un connecteur (3) apte à être branché à un réseau électrique apte à fournir une tension alternative triphasée,
   - un onduleur/redresseur (6), comprenant trois bras de commutation (7) montés en parallèle, chaque bras de commutation (7) comprenant deux interrupteurs (8) disposés de part et d'autre d'un point milieu (9) apte à être connecté à une phase respective de la tension alternative,
   - un quatrième bras de commutation (10) monté en parallèle des bras de commutation (7) de l'onduleur/redresseur, ce quatrième bras de commutation (10) comprenant deux interrupteurs (11) disposés de part et d'autre d'un quatrième point milieu (12) apte à être connecté au neutre du réseau électrique, et
   - une branche (13) montée en parallèle desdits bras de commutation (7, 10), comprenant deux condensateurs (14) disposés de part et d'autre d'un cinquième point milieu (15), et une résistance de mesure (17), montée en série avec l'un des condensateurs (14),

   la branche (13) et les bras de commutation (7, 10) étant montés entre deux bornes à potentiel continu,

   un premier interrupteur (20) étant monté en parallèle de la résistance de mesure (17) et un deuxième interrupteur (21) étant monté en série entre le quatrième (12) et le cinquième (15) point milieu,

   la méthode comprenant les étapes successives suivantes :

   - la commande de l'onduleur/redresseur (6) par modulation de largeur d'impulsion pour appliquer aux bornes de la branche (13) une première tension de commande supérieure au double de l'amplitude de la tension de phase du réseau électrique, le premier interrupteur (20) et le deuxième interrupteur (21) étant ouverts,
   - la commande de l'onduleur/redresseur (6) de manière à ce que la branche (13) ne soit plus électriquement alimentée,
   - la fermeture du premier (20) et du deuxième (21) interrupteur, et
   - la commande de l'onduleur/redresseur (6) par modulation de largeur d'impulsion pour appliquer aux bornes de la branche (13) une deuxième tension de commande supérieure au double de l'amplitude de la tension de phase du réseau électrique, le premier (20) et deuxième (21) interrupteurs étant fermés.

2. Méthode selon la revendication 1, dans laquelle la valeur de la première tension de commande et la valeur de la deuxième tension de commande sont égales.

3. Méthode selon la revendication 1 ou 2, dans laquelle la valeur de la première tension de commande et la valeur de la deuxième tension de commande sont comprises entre $2 \times \sqrt{2} \times V_{eff}$ et $2 \times \sqrt{2} \times V_{eff} + 100V$, $V_{eff}$ étant la valeur efficace de la tension de phase du réseau électrique (1).

4. Méthode selon l'une quelconque des revendications précédentes, dans laquelle la commande de l'onduleur /redresseur (6) par modulation de largeur d'impulsion pour appliquer aux bornes de la branche (13) la deuxième tension de commande supérieure au double de l'amplitude de la tension de phase du réseau, une fois le premier (20) et le deuxième (21) interrupteurs fermés, est conditionnée à la vérification que la tension aux bornes de la branche (13) est déjà supérieure au double de l'amplitude de la tension de phase du réseau.

5. Méthode selon l'une quelconque des revendications précédentes, dans laquelle la durée entre :

   - le passage à la commande de l'onduleur/redresseur (6) de manière à ce que la branche (13) ne soit plus électriquement alimentée, et
   - la fermeture du premier (20) et du deuxième (21) interrupteur est inférieure à 5s, étant notamment inférieure à 1s, notamment à 100ms..

6. Méthode selon l'une quelconque des revendications précédentes, dans laquelle le chargeur (2) comprend encore un convertisseur de tension DC/DC (25) isolé apte à convertir la tension aux bornes de la branche (13) en une tension apte à être appliquée aux bornes de l'unité de stockage d'énergie électrique, les étapes de la méthode selon l'une quelconque des revendications précédentes étant appliquées alors que ce convertisseur de tension DC/DC (25) est commandé de manière à ne pas transférer de tension entre la branche (13) et l'unité de stockage d'énergie électrique.

7. Méthode selon l'une quelconque des revendications précédentes, les interrupteurs (11) du quatrième bras de commutation (10) étant des diodes ou des transistors de puissance.

8. Chargeur (2) d'unité de stockage d'énergie électrique de véhicule, le chargeur (2) comprenant :

   - un connecteur (3) apte à être branché à un réseau électrique (1) apte à fournir une tension alternative triphasée,
   - un onduleur/redresseur (6), comprenant trois bras de commutation (7) montés en parallèle, chaque bras de commutation (7) comprenant deux interrupteurs commandables (8) disposés de part et d'autre d'un point milieu (9) apte à être connecté à une phase respective de la tension alternative,
   - un quatrième bras de commutation (10) monté en parallèle des bras de commutation (7) de l'onduleur/redresseur, ce quatrième bras de commutation (10) comprenant deux interrupteurs (11) disposés de part et d'autre d'un quatrième point milieu (12) apte à être connecté au neutre du réseau électrique, et
   - une branche (13) montée en parallèle desdits bras de commutation (7, 10), comprenant deux condensateurs (14) disposés de part et d'autre d'un cinquième point milieu (15), et une résistance de mesure (17), montée en série avec l'un des condensateurs (14),

   la branche (13) et les bras de commutation (7, 10) étant montés entre deux bornes à potentiel continu,

   un premier interrupteur (20) étant monté en parallèle de la résistance de mesure (17) et un deuxième interrupteur (21) étant monté en série entre le quatrième (12) et le cinquième (15) point milieu,
   le chargeur (2) comprenant également une unité de contrôle (40) adaptée pour exécuter les étapes de la méthode selon l'une quelconque des revendications précédentes.

9. Produit programme d'ordinateur comprenant des instructions qui conduisent le chargeur (2) selon la revendication 8 à exécuter les étapes de la méthode selon l'une quelconque des revendications 1 à 7.

10. Support lisible par ordinateur, sur lequel est enregistré le programme d'ordinateur selon la revendication 9.

[Fig 1]

[Fig 2]

Europäisches Patentamt
European Patent Office
Office européen des brevets

# RAPPORT DE RECHERCHE EUROPEENNE

**Numéro de la demande**

EP 26 15 3173

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2023/035838 A1 (LI CHENG-TE [TW] ET AL) 2 février 2023 (2023-02-02) * abrégé * * alinéa [0001] - alinéa [0056]; figures 1-13 * ----- | 1-10 | INV. H02M1/00 H02M1/32 H02M1/36 H02M1/42 H02M7/797 |
| A | US 2021/344188 A1 (CHEN YIRAN [GB] ET AL) 4 novembre 2021 (2021-11-04) * abrégé * * alinéa [0001] - alinéa [0068]; figures 1-5 * ----- | 1-10 | |

**DOMAINES TECHNIQUES RECHERCHES (IPC)**

H02M

Le présent rapport a été établi pour toutes les revendications

| Lieu de la recherche | Date d'achèvement de la recherche | Examinateur |
|---|---|---|
| La Haye | 17 février 2026 | Adami, Salah-Eddine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 26 15 3173

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2026

| Document brevet cité au rapport de recherche | Date de publication | Membre(s) de la famille de brevet(s) | Date de publication |
|---|---|---|---|
| US 2023035838 A1 | 02-02-2023 | CN 115700981 A | 07-02-2023 |
| | | US 2023035838 A1 | 02-02-2023 |
| US 2021344188 A1 | 04-11-2021 | CN 112789777 A | 11-05-2021 |
| | | EP 3633811 A1 | 08-04-2020 |
| | | EP 3861612 A1 | 11-08-2021 |
| | | US 2021344188 A1 | 04-11-2021 |
| | | WO 2020069894 A1 | 09-04-2020 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 112803800